# EUROPEAN PATENT APPLICATION

(11) **EP 4 661 086 A1**
(43) Date of publication of application: **10.12.2025**
(21) Application number: 23919802.1
(22) Date of filing: 13.03.2023
(51) Int. Cl.: H01M 4/04, H01M 4/72, H01M 4/139

(54) **DRYING METHOD FOR SECONDARY BATTERY COATING FILM, AND COATING DEVICE FOR SECONDARY BATTERY COATING FILM**

(30) Priority: 31.01.2023 JP 2023013109
(71) Applicant: O.M.C. Co., Ltd., Takatsuki-shi Osaka 569-1026 (JP)
(72) Inventor: WATANABE, Shinji, Takatsuki-shi, Osaka 569-1026 (JP)
(74) Representative: HGF
(86) International application number: PCT/JP2023/009704
(87) International publication number: WO 2024/161665

(57) **Abstract**

The present invention is a drying method for a coating film. A metal foil current collector 1 having a long strip shape and being conveyed in one direction is intermittently or continuously coated with a coating liquid 2 as an active material mixture for a secondary battery, whereby a coating film 3 is formed on the current collector 1. The metal foil current collector 1 is sent to a drying step, and the metal foil current collector 1 is heated such that the coating film 3 is dried in the drying step. Before or during the drying step for the coating film 3, the coating film 3 is irradiated with a laser beam L such that a hole 3h is formed in the coating film 3.

## Description

### Technical Field

The present invention relates to a drying method for a coating film for a high-capacity secondary battery (including a lithium ion capacitor) thickly applied on a current collector composed of a long and wide metal foil, and a coating device for the coating film for the high-capacity secondary battery.

### Background Art

In these days, as environmental countermeasures, secondary batteries such as high-capacity lithium-ion batteries have attracted a lot of attention as power supplies for electric vehicles, power-driven engines, and electronic devices. When a lithium-ion battery is taken as an example, a positive/negative electrode in which a positive/negative electrode active material mixture (coating liquid) is thickly applied, for example, 100 µm, on a strip-shaped current collector (metal foil) and is dried and cured, is used (original sheet for secondary battery).
Then, the current collector (original sheet for secondary battery) is cut to a predetermined width, and is formed into narrow current collectors or rectangular-shaped sheets.

The narrow current collectors are wound in a cylindrical shape with a separator therebetween to form an electrode assembly. The electrode assembly is housed in a cylindrical battery can, or the cylindrical electrode assembly is further formed in a flat shape and is housed in a rectangular battery can, and an electrolyte is injected into the can, to obtain a secondary battery.

In a case of a rectangular-shaped sheet, the rectangular-shaped sheets are housed in a bag such that many positive electrodes and negative electrodes thereof are stacked with separators therebetween, and similarly, an electrolyte is injected therein to obtain a secondary battery.

A positive/negative electrode coating film is formed by applying a coating liquid (active material mixture) extruded from a die of a coating device such that the coating liquid forms rectangular shapes at regular intervals on one or each surface of a long and wide current collector (metal foil), or by continuously applying the coating liquid thereon. The coating liquid is a water- or solvent-based viscous material in a slurry or paste form.

The above-described coating film is applied, and then is sent to a drying oven in a viscous state. Most of a solvent or moisture is removed through volatilization or evaporation. Then, in order to increase the density of the cured coating film, roll press is performed. Further, in order to remove a solvent or moisture remaining in the coating film, additional drying is performed, whereby the above-described electrode original sheet for a secondary battery in which a hard coating film is formed on (one or each surface of) a metal foil, is prepared.

An example of the above-described drying oven described in Patent Literature 1. The drying oven described in Patent Literature 1 includes an oven body through which a strip-shaped current collector being conveyed in the horizontal direction passes, and an air-blowing portion for blowing air to the oven body and drying a coating film.

### Citation List

### [Patent Literature]

[PTL 1] Japanese Laid-Open Patent Publication No. H10-228898

### Summary of Invention

### Technical Problem

In such a drying oven in which the strip-shaped current collector is being conveyed in the horizontal direction, in a case where the positive/negative electrode coating film is thickly applied, it takes a long time to dry, and thus the drying oven is long and large, for example, 100 m. This long and large drying oven needs a vast installation area.

The present invention has been made in view of such a problem of the conventional example. A first object of the present invention is to provide a drying method for a coating film, which enables rapid drying of a high-capacity secondary battery coating film thickly applied on a current collector composed of a long and wide metal foil, so that the length of a drying oven can be shortened, and a second object of the present invention is to provide a coating device which allows the drying oven for the secondary battery coating film to be shortened.

### Solution to Problem

The invention recited in claim 1 is a drying method for a coating film 3 thickly applied.

In the drying method for the coating film in which a current collector 1 of a metal foil having a long strip shape and being conveyed in one direction is intermittently or continuously coated with a coating liquid 2 as an active material mixture for a secondary battery such that the coating film 3 is formed on the current collector 1, subsequently, the current collector 1 of the metal foil is sent to a drying step, and the current collector 1 of the metal foil is heated such that the coating film 3 is dried in the drying step,
before or during the drying step for the coating film 3, the coating film 3 is irradiated with a laser beam L such that a hole 3h is formed in the coating film 3.

According to the invention recited in claim 2, in the drying method for the coating film 3 according to claim 1,
the hole 3h is a blind hole 3h1 that extends from a surface of the coating film 3 and that does not reach the current collector 1 of the metal foil, or a through hole 3h2 penetrating the coating film 3 and the current collector 1 of the metal foil.

According to the invention recited in claim 3, in the drying method for the coating film according to claim 1 or 2,
air in an irradiation range of the laser beam L is sucked, and fine dust generated from the coating film 3 by laser irradiation is sucked and removed.

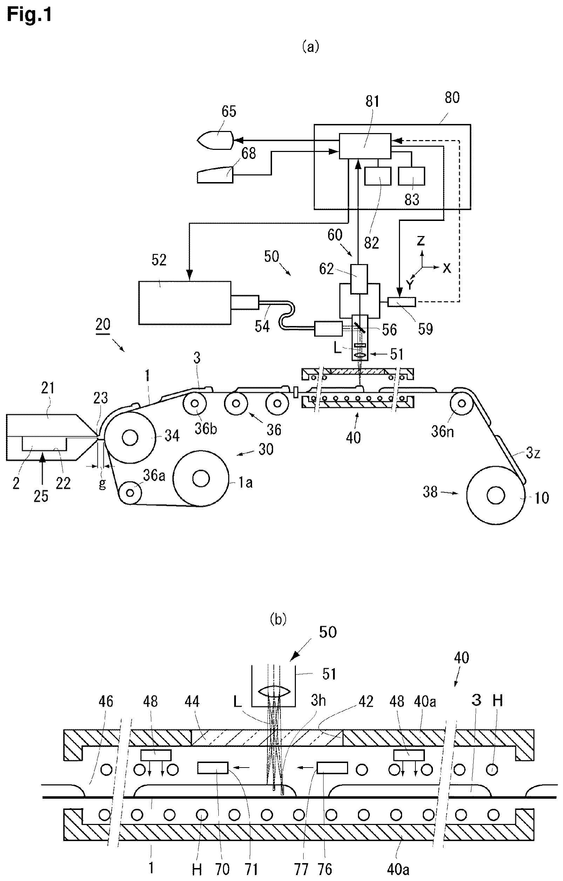

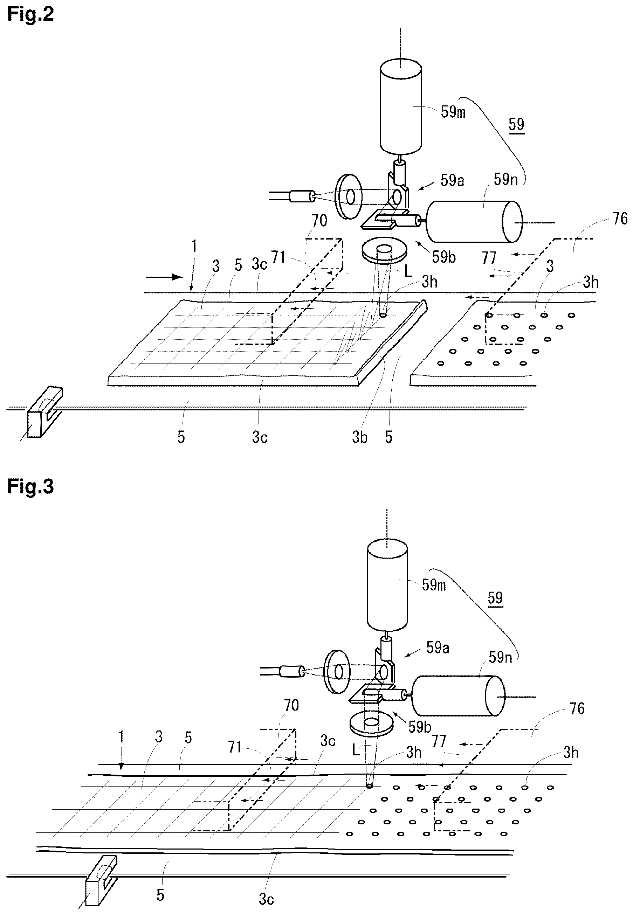

The invention recited in claim 4 is a first coating device (irradiation in oven: FIG. 1, FIG. 2) for performing the drying method for the coating film according to claim 1.

The first device 20 is a coating device 20 including:
a current collector feed unit 30 that feeds a current collector 1 composed of a long metal foil in one direction;
a die 21 that applies a coating liquid 2 as an active material mixture for a secondary battery on a surface of the fed current collector 1, and that forms a coating film 3 on the surface of the current collector 1;
a drying oven 40 that is provided downstream of the die 21, that includes a passage 46 through which the current collector 1 being conveyed in one direction passes and a drying heat source H, and that dries the coating film 3;
a winding unit 38 that winds the current collector 1 which has been conveyed out of the drying oven 40 and which has the dried coating film 3 applied thereon; and
a laser irradiation device 50 that irradiates the coating film 3 having become semi-dry with a laser beam L in the drying oven 40, and that forms a blind hole 3h1 that extends from a surface of the coating film 3 and that does not reach the current collector 1, or a through hole 3h2 penetrating the coating film 3 and the current collector 1.

The laser irradiation device 50 is provided at a lateral side of the drying oven 40, and
a transmission window 42 through which the laser beam L passes is provided in a side wall 40a of the drying oven 40.

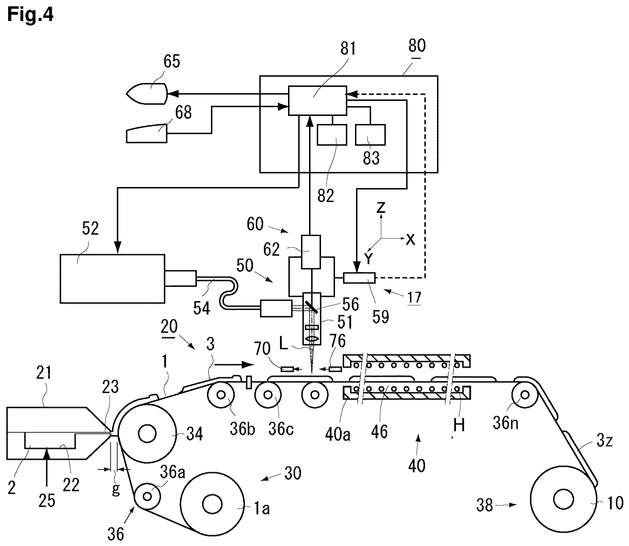

The invention recited in claim 5 is a second coating device (irradiation before oven: FIG. 4) for performing the drying method for the coating film according to claim 1.

The second coating device 20 includes:
a current collector feed unit 30 that feeds a current collector 1 composed of a long metal foil in one direction;
a die 21 that applies a coating liquid 2 as an active material mixture for a secondary battery on a surface of the fed current collector 1, and that forms a coating film 3 on the surface of the current collector 1;
a drying oven 40 that is provided downstream of the die 21, that includes a passage 46 through which the current collector 1 being conveyed in one direction passes and a drying heat source H, and that dries the coating film 3;
a winding unit 38 that winds the current collector 1 which has been conveyed out of the drying oven 40 and which has the dried coating film 3 applied thereon; and
a laser irradiation device 50 that is provided upstream of the drying oven 40, that irradiates the coating film 3 in an undried state before the coating film 3 is conveyed into the drying oven 40, with a laser beam L, and that forms a blind hole 3h1 extending from a surface of the coating film 3 and not reaching the current collector 1, or a through hole 3h2 penetrating the coating film 3 and the current collector 1.

According to the invention (suction process) recited in claim 6, in the coating device 20 according to claim 4 or 5,
a suction nozzle 70 that includes a suction port 71 covering an irradiation range of the laser beam L is further installed.

### Advantageous Effects of Invention

According to the present invention, since the hole 3h is formed in the coating film 3 by the laser beam L before or during the drying step for the coating film 3, in the drying step, a solvent or moisture in the coating film 3 evaporates from not only the surface of the coating film 3 but also an inner surface of the hole 3h, a drying time for the coating film 3 can be shortened, and thus a drying distance, that is, the entire length of the drying oven 40, can be shortened.

In addition, air in the irradiation range of the laser beam L is sucked, and thus fine dust generated from the coating film 3 by laser irradiation can be sucked and removed, so that a problem where fine dust adheres to the surface of the coating film 3 can be avoided in the subsequent step.

### Brief Description of Drawings

[FIG. 1] FIG. 1(a) is a schematic configuration diagram of a coating device according to embodiment 1 of the present invention, and FIG. 1(b) is a schematic configuration diagram of a drying oven of the coating device.
[FIG. 2] FIG. 2 is an enlarged perspective view of a laser irradiation section in FIG. 1 for a rectangular-shaped coating film.
[FIG. 3] FIG. 3 is an enlarged perspective view of a laser irradiation section in FIG. 1 for a continuous coating film.
[FIG. 4] FIG. 4 is a schematic configuration diagram of a coating device according to embodiment 2 of the present invention.
[FIG. 5] FIGS. 5(a)(b) are each a schematic configuration diagram of a coating device according to embodiment 3 of the present invention.
[FIG. 6] FIGS. 6(a)(b) are each an enlarged perspective view of a laser irradiation section by a split-type laser irradiation device.
[FIG. 7] FIG. 7(a) is an enlarged cross-sectional view of a coating film having therein a blind hole, and FIG. 7(b) is an enlarged cross-sectional view of a coating film and a current collector having therein a through hole.

### Description of Embodiments

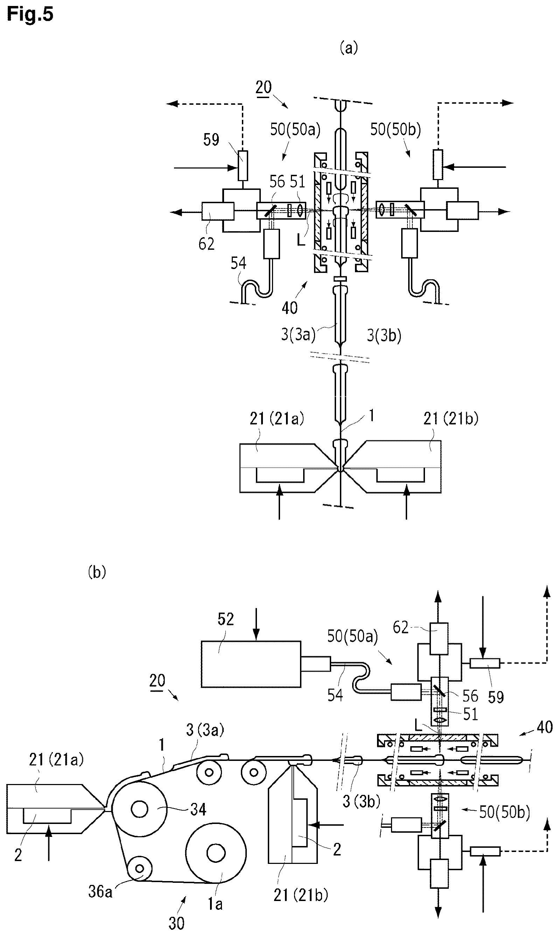

Hereinafter, the present invention will be described in detail with reference to the drawings. FIG. 1 is a schematic configuration diagram of a coating device 20 according to embodiment 1 of the present invention, FIG. 4 is a schematic configuration diagram of a coating device 20 according to embodiment 2, and FIGS. 5(a)(b) are each a schematic configuration diagram of a coating device 20 according to embodiment 3. Each coating device 20 is a device that coats a current collector 1 composed of a wide and long metal foil and being conveyed in a roll-to-roll manner, with a coating liquid 2 and that dries the coated current collector 1, to produce an original sheet 10 for a high-capacity secondary battery. The coating device 20 mainly includes a current collector feed unit 30, a coating unit including a die 21, a backup roller 34, conveyor rollers 36a to 36n, a drying oven 40, a winding unit 38, a laser irradiation device 50, and an image processing device 60, a suction nozzle 70, and a control unit 80 which are provided as needed.

The current collector 1 to be applied to the coating device 20 is composed of a wide and long metal foil and is wound in the form of a roll. This is referred to as metal foil roll 1a. In a case of a positive electrode, the current collector 1 is composed of an aluminum foil, and in a case of a negative electrode, the current collector 1 is composed of a copper foil.

In the case of the positive electrode, the coating liquid 2 to be applied on the current collector 1 is, for example, a positive electrode active material mixture prepared by dispersing and mixing a lithium-transition metal composite oxide such as LixCoO₂, LixNiO₂, LixMn₂O₄, LixMnO₃, or LixNiyCo(1-y)O₂ with a conductive material such as carbon black, a binding agent such as polyvinylidene fluoride (PVDF), and a solvent such as N-methyl-2-pyrrolidone (NMP).

In the case of the negative electrode, the coating liquid 2 is, for example, a negative electrode active material mixture prepared by dispersing and mixing pyrolytic carbons that can dope and undope lithium, cokes such as pitch coke, needle coke, and petroleum coke, graphites, glassy carbons, an organic high-molecular-weight compound firing body obtained by firing phenolic resin, furan resin, or the like, a carbonaceous material such as carbon fiber and activated carbon, and a conductive high-molecular-weight material such as polyacetylene and polypyrrole with a conductive material such as carbon black, a binding agent such as polyvinylidene fluoride (PVDF), and a solvent such as N-methyl-2-pyrrolidone (NMP).

The metal foil roll 1a wound in a roll shape is rotatably retained by the current collector feed unit 30, is fed out from the current collector feed unit 30, and is continuously conveyed in one direction.

At the die 21, one or each surface of the current collector 1 is coated with the coating liquid 2 discharged from the die 21. Then, when having entered the drying oven 40, the coating liquid 2 is dried and cured therein, and a cured coating film 3z is formed on the surface of the current collector 1, whereby the original sheet 10 for a secondary battery is obtained and wound by the winding unit 38.

During this period, while the coating layer 3 is in an undried state or a semi-dry state, the surface of the coating film 3 is irradiated with a laser beam L such that many holes 3h are formed at predetermined intervals throughout the entire coating film 3.

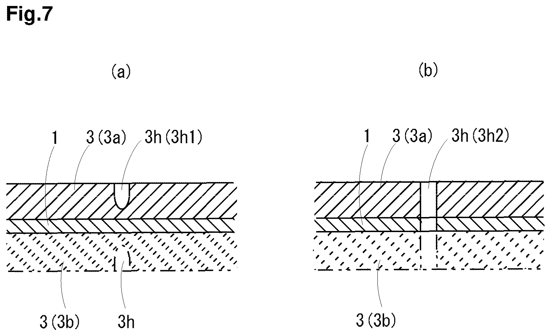

As each hole 3h, a blind hole 3h1 extending from the surface of the coating layer 3 and not reaching the current collector 1 as in FIG. 7(a), and a through hole 3h2 penetrating the coating layer 3 and the current collector 1 as in FIG. 7(b), are provided.

The coating of the current collector 1 with the coating liquid 2 by the coating device 20 is performed either on only one surface as in FIG. 1 or FIG. 4 or on both surfaces as in FIGS. 5(a)(b). In a case of one surface, the coating is performed by one die 21, and in a case of both surfaces, the coating is performed by two dies 21a, 21b positioned to face the front and back surfaces of the current collector 1, or two dies 21a, 21b that include one positioned to be spaced from an entrance side of the drying oven 40 and the other positioned adjacent to the entrance side as in FIG. 5(b). It is needless to say that the present invention is not limited thereto. The current collector 1 is continuously fed in one direction.

Regarding the coating, the coating liquid 2 is intermittently extruded from the die 21 through pump operation such that rectangular-shaped coating films 3 are formed at regular intervals on the middle part of the current collector 1 (FIG. 2), or while the current collector 1 is continuously fed, the coating liquid 2 is continuously extruded from the die 21 such that the middle part of the current collector 1 is continuously coated with the coating film 3 of the coating liquid 2 (FIG. 3).

In a case of the rectangular-shaped coating films 3, the regions between lateral margin parts 3c of the coating films 3 and lateral edges of the current collector 1 and the regions between the coating films 3 adjacent in the front and back direction, compose an uncoated region 5 (FIG. 2).

In a case of continuous extrusion, the regions between lateral margin parts 3c of the coating film 3 and the lateral edges of the current collector 1 compose the uncoated region 5 (FIG. 3).

Then, the current collector 1 becomes the original sheet 10 for a secondary battery through a drying and curing process for the coating film 3. Then, although not shown, the original sheet 10 is cut into a plurality of strips or rectangular-shaped sheets according to the shape of a product as described above, and tabs are formed in the above-described uncoated region 5 as needed.

Examples of the product to which the original sheet 10 is applied include a secondary battery and a capacitor. The secondary battery is not limited to a lithium ion secondary battery, and may be another secondary battery such as a nickel-metal hydride secondary battery or a nickel-cadmium secondary battery. The capacitor may be, for example, an electric double layer capacitor, a lithium ion capacitor, or the like.

The blind hole 3h1 or the through hole 3h2 is formed by the laser beam L in the coating film 3 applied on the surface of the current collector 1, and the coating film 3 is irradiated with the laser beam L either in the drying oven 40 as in FIG. 1 (embodiment 1) or before the coating film 3 enters the drying oven 40 as in FIG. 4 (embodiment 2). As described above, the drying ovens 40 are divided into two types based on differences in the irradiation locations of the laser beam L. In embodiment 1, a transmission window 42 fitted with a heat-resistant glass 44 is provided in a side wall 40a of the drying oven 40 (FIG. 1(b)).

Examples of the heat-resistant glass 44 include borosilicate glass and quartz glass, and, in order for the laser beam L to pass through without distortion, quartz glass is preferable.

The current collector feed unit 30 refers to a portion that rotatably supports the metal foil roll 1a wound in a roll shape and that feeds the current collector 1 in a direction toward the die 21, and feeding of the current collector 1 is performed by a servo motor for the feeding (not shown).

The coating unit including the die 21 includes the die 21, and a coating liquid supply unit 25 that supplies the coating liquid 2 to the die 21 through pump operation such that an excess or deficiency thereof is not caused.

The die 21 has a tapered cross section, and has therein a liquid reservoir 22 formed as a space in which the coating liquid 2 is stored, and the liquid reservoir 22 communicates with a nozzle opening 23 having a slit shape.

The nozzle opening 23 extends long along the width direction of the current collector 1. The opening dimension (height dimension) of the nozzle opening 23 is, for example, 0.1 to 10 mm. The coating liquid 2 is applied on the current collector 1 with a width-direction dimension that is approximately the same as the width-direction dimension of the nozzle opening 23.

The coating liquid supply unit 25 that supplies the coating liquid 2 is connected to the liquid reservoir 22. A direction in which the coating liquid 2 stored in the liquid reservoir 22 flows through the nozzle opening 23 toward the current collector 1 is perpendicular to the surface of the current collector 1, and the coating is performed along a feed direction for the current collector 1.

The coating liquid 2 supplied from the coating liquid supply unit 25 can be stored in the liquid reservoir 22, and the coating liquid 2 stored in the liquid reservoir 22 is discharged through the nozzle opening 23 by pump pressure onto the current collector 1 being conveyed in a roll-to-roll manner, to coat the current collector 1 with the coating liquid 2. The thickness of the film (coating film 3) of the coating liquid 2 applied on the current collector 1 is designed so as to be approximately uniform in the width direction.

During coating work with the die 21, the amount of the coating liquid 2 in a tank (not shown) for supplying the coating liquid 2 to the die 21 may decrease, or the temperature of the liquid may change in response to the ambient temperature, causing the viscosity of the coating liquid 2 to vary, so that the discharge rate of a pump (not shown) for supplying the coating liquid 2 to the die 21 may change.

When the discharge rate has changed, it is addressed basically by adjusting the rotation rate of the pump. However, if the change in the discharge rate is small, a gap g between the die 21 and the current collector 1 is adjusted.

Thus, in a case of continuous coating, the width-direction dimension or the coating thickness of the coating film 3 is maintained. In a case of intermittent coating, in addition to this, accuracy in the width-direction dimension is maintained in the coating section.

The backup roller 34 in FIG. 1 is positioned directly opposite the die 21. In a case in FIG. 5(a), a pair of the front and back dies 21a, 21b are positioned directly opposite each other with the current collector 1 therebetween, and no backup roller 34 is provided. A case in FIG. 5(b) is different from the example in FIG. 5(a), and the back die 21b is installed near the entrance of the drying oven 40, opposite the front die 21a.

The current collector 1 is guided in one direction by the backup roller 34 positioned directly opposite the die 21. The distance (gap g) between the current collector 1 and the slit-shaped nozzle opening 23 of the die 21 is kept constant, and coating with the coating liquid 2 is performed in this state. The width direction of the nozzle opening 23 of the die 21 is parallel to the direction of the axis of rotation of the backup roller 34.

The conveyor roller 36a on the entrance side and the conveyor roller 36b on the exit side for guiding the current collector 1 are rotatably provided before and after the backup roller 34. The conveyor rollers are collectively denoted by 36.

In order to adjust the gap g which is a distance between the nozzle opening 23 of the die 21 and the current collector 1 being conveyed on the backup roller 34, the die 21 or the backup roller 34 is supported movably around the proximity thereof and in a separation direction by an air cylinder (not shown).

The current collector 1 fed out from the current collector feed unit 30 is conveyed at a predetermined speed, while maintaining a predetermined tension by the rotational drive of a plurality of the conveyor rollers 36a to 36n arranged at predetermined intervals. The rotation speed of the metal foil roll 1a in the current collector feed unit 30, the winding speed of the winding unit 38, and the rotation speed of each of the conveyor rollers 36a to 36n are controlled by the control unit 80.

The drying oven 40 is disposed on the downstream side of the die 21. The drying oven 40 mainly includes: a tubular body enclosed by the side walls 40a and including therein a passage 46 through which the long metal foil current collector 1 passes; a heat source (a pipe through which high-temperature vapor passes or an electric heater) H for heating and drying the metal foil current collector 1 moving in the passage 46; and a dryer 48 for air-drying the metal foil current collector 1, and a suction nozzle 70 for sucking fumes and fine dust that are generated from an irradiated portion, which are provided as needed.

A plurality of the heat sources H and a plurality of the dryers 48 are arranged along the passage 46 for the current collector 1, inside the drying oven 40. The drying oven 40 dries the coating film 3 formed on the current collector 1, through radiant heat from the heat source H and warm air from the dryer 48.

There are two types of the drying ovens 40 (embodiments 1, 2) based on the location where a hole forming process by the laser beam L is performed.

In the drying oven 40 of embodiment 1, since laser machining is performed on the coating film 3 in the oven, the transmission window 42 fitted with the heat-resistant glass 44 is provided in the side wall 40a.

In the drying oven 40 of embodiment 2, since laser machining is performed on the coating film 3 at a location before the oven, no transmission window 42 is provided in the side wall 40a.

In a case in FIG. 1, since the coating film 3 is formed on only one surface of the current collector 1, the transmission window 42 is provided in one of the side walls 40a. However, in each case where the coating films 3 are formed on both surfaces of the current collector 1 as in FIG. 5, the transmission windows 42 are provided in both the side walls 40a.

The suction nozzle 70 has a suction port 71 that is open toward the irradiation range of the laser beam L and that covers the irradiation range. A blowing nozzle 76 for blowing air toward the suction port 71 may be provided. An air outlet 77 of the blowing nozzle 76 is directed toward the suction port 71, and the irradiation range of the laser beam L is located between the suction port 71 and the air outlet 77.

The winding unit 38 is provided on a side opposite the current collector feed unit 30, and is a portion that winds, into a roll shape, the original sheet 10 in which rectangular-shaped dried coating films 3z have been formed at predetermined intervals on at least one surface of the current collector 1, or a continuous dried coating film (not shown) has been formed thereon, and the winding unit 38 is installed at the most downstream location in the coating device 20.

The winding is performed by synchronizing a winding servo motor (not shown) such that the tension of the current collector 1 fed in cooperation with the current collector feed unit 30 is always constant through a dancer roller (e.g., conveyor roller 36a or 36n) as one of the conveyor rollers 36.

The laser irradiation device 50 includes a laser emission unit 51 composed of an optical system obtained by combining various lens systems, a laser generating unit 52 that emits the laser beam L, and a galvano drive unit 59, and the laser emission unit 51 and the laser generating unit 52 are connected to each other through a laser transfer component 54. Thus, the laser beam L is allowed to enter the laser emission unit 51.

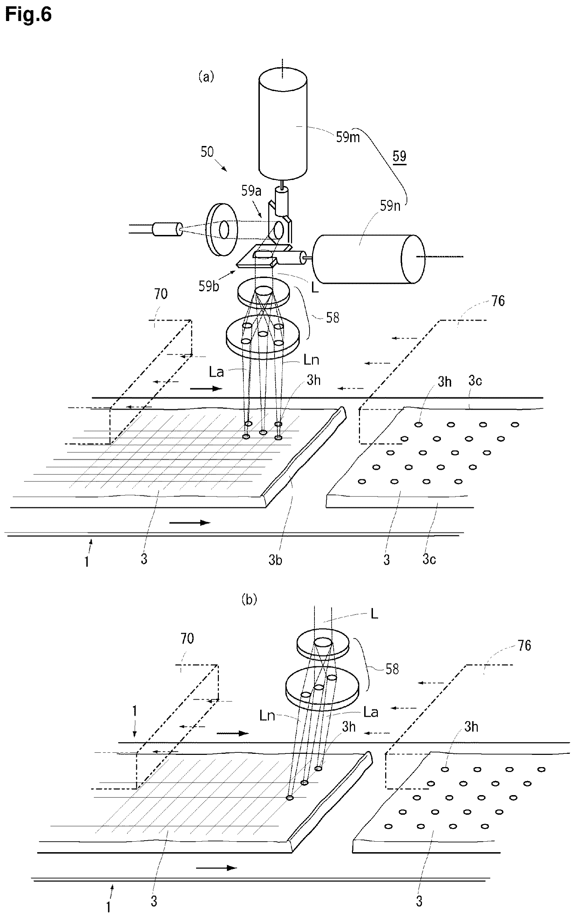

The laser irradiation device 50 emits a single laser beam L as in FIG. 2 or FIG. 3, or splits the laser beam L in another case as in FIG. 6. In the laser irradiation device 50 in FIG. 6, a split-type lens 58 is provided at an emission port of the laser emission unit 51, and the laser beam L that has been emitted through the emission port of the laser emission unit 51 is split into a plurality of laser beams La to Ln.

The galvano drive unit (galvano scanner) 59 is provided to each of a laser irradiation device 50 that emits a single laser beam L and a split-type laser irradiation device 50.

Each laser irradiation device 50 is a device that controls the laser beam L using galvano mirrors 59a, 59b in any two-dimensional XY direction through mirror angle adjustment by the drive motors 59m, 59n (or three-dimensional XYZ direction, although not shown), and that irradiates a pinpoint location with the laser beam L (in a case of the three-dimensional direction, the height can be adjusted).

In a case where the laser irradiation device 50 is provided on each of the front and back surface sides as in FIG. 5, for simplifying the description, description and reference signs for a laser irradiation device 50a on the front surface side are applied to those for a laser irradiation device 50b on the back surface side.

In the present invention, since the current collector 1 continuously moves in a constant direction, as shown in FIG. 1(b), the galvano drive unit 59 is operated through mirrorangle adjustment two-dimensionally in the XY direction according to the movement speed of the current collector 1, and the laser beam L is focused on a single point and is moved in the same direction from the home position to the position at which the hole forming process is completed, to perform the hole forming process. When the hole forming process has been completed, the laser beam L is turned off and returned to the home position, to perform the hole forming process for the next column.

In a case where the laser emission unit 51 has a structure that causes the laser beam to split into the split laser beams La to Ln in a direction orthogonal to (or intersecting) the conveyance direction as in FIG. 6(b), the laser emission unit 51 only needs to reciprocate according to the movement direction of the current collector 1. However, in a case of a split structure that causes the laser beam to disperse in a circular pattern as in FIG. 6(a), or a case of a single laser beam L as in FIG. 2, a plurality of laser emission units (not shown) are prepared at locations orthogonal to (or intersecting) the movement direction of the current collector 1, or the laser beam L is steered along two XY axes through mirror angle adjustment, to perform the hole forming process.

As the laser beam L to be used here, a YAG laser or a YVO₄ laser at 1.064 µm, which is a fundamental wave, the green laser beam at 532 nm obtained through a second harmonic generation (SHG) wavelength conversion element, the UV laser beam at 355 nm obtained through a third harmonic generation (THG) wavelength conversion element, laser beam having even shorter wavelengths, etc., are used.

As the wavelength of the laser beam L becomes shorter, the light focusing ability increases and the energy efficiency per unit increases, and thus such laser beam L is suitable for micromachining and is used for precision components, semiconductor-related industries, etc.

The laser beam L is emitted using techniques such as continuous wave, pulsed operation, Q-switched pulsed operation, and single mode. The second harmonic and the third harmonic each have a high absorption rate in metal foils. Thus, when the second harmonic or the third harmonic reaches a metal foil during hole machining described below, the metal foil is instantaneously heated and reaches a high temperature, so that the bond strength between the current collector 1 and the coating film 3 applied on the current collector 1 composed of a metal foil is increased. In other words, the peel strength of the coating film 3 is improved.

In a case where the hole 3h is formed by a YAG laser beam or a YVO4 laser beam at 1.064 µm, the forming is generally performed in a pulsed operation mode.

When a green laser beam (second harmonic), a UV laser beam (third harmonic), or the like is used, the irradiated object sublimates into a gas directly. When a green laser beam, a UV laser beam, or the like is used, the thermal alteration of the material forming the coating film 3 is suppressed and thus it is preferable.

During the hole forming by a YAG laser beam or a YVO₄ laser beam in a pulsed operation mode, it is preferable to blow air (assist air) to a molten part in order to remove a molten material (active material mixture or metal foil) from the molten part. In this case, the molten material scatters around as fine particles, and thus it is necessary that the fine particles are sucked and removed.

In addition, when a green laser beam, a UV laser beam, or the like is used, vapor of the active material mixture or the metal foil rises from the irradiation part, and the vapor cools and solidifies into fine dust, which scatters around, and thus it is also necessary that the fine dust is sucked and removed.

The image processing device 60 includes a CCD camera 62, a light source for illumination (not shown), an external monitor 65, an input device 68, and the control unit 80 including a CPU 81, a ROM 82, and a RAM 83.

The CCD camera 62 is used to analyze the image of the hole 3h formed in the surface of the coating film 3 and convert the image to a digital signal, and is connected to the CPU 81 in the control unit 80. The image of the hole 3h in the coating film 3, which has been captured by the CCD camera 62, is converted to the digital signal and is transmitted to the CPU 81.

In general, a He-Ne laser is used for optical axis alignment between the image processing device 60 and the laser beam L.

As described above, a transmission-type total reflection mirror 56 is incorporated in the optical system of the laser emission unit 51, thus allowing the laser beam L, a light for illumination, and the laser beam for optical axis alignment, which have entered the laser emission unit 51, to be totally reflected.

Each optical axis of these beams totally reflected by the total reflection mirror 56 matches the optical axis of a beam that enters the image processing device 60, and the laser beam L can be focused on the point on the optical axis. In the coating device 20 of the present embodiment, the focal position of the CCD camera 62 included in the image processing device 60 and the focal position of the laser beam L emitted by the laser generating unit 52 are set so as to match each other.

A light source for illuminating a workpiece (not shown) is designed such that the light enters the laser emission unit 51 through an optical fiber cable (not shown), and the light that has entered passes the optical system through the transmission-type total reflection mirror 56, whereby the surface (hole 3h) of the coating film 3 is illuminated.

The control unit 80 includes the CPU 81, the ROM 82, the RAM 83, the external monitor 65, and the input device 68 such as a keyboard, and the entireties of the processing procedure and the galvano driving procedure for the coating device 20 are programmed in the ROM 82. In addition, the image signal of the hole 3h in the coating film 3, which has been captured by the image processing device 60, is stored in the RAM 83.

The galvano driving procedure is used for controlling the conversion of the optical path of the laser beam L into one to three dimensions, and is connected to the CPU 81, and the optical path of the laser beam L is moved on the basis of the instructions of the CPU 81.

The external monitor 65 is for projecting the image of the hole 3h in the coating film 3, which has been captured by the image processing device 60.

The input device 68 allows an operator to manually input the condition settings of the CPU 81.

In the present embodiment, the laser irradiation device 50 and the image processing device 60 are integrated with each other.

In the following description, embodiment 1 will be described, and then embodiments 2, 3 will be described. Embodiments 2, 3 will be described focusing on differences from embodiment 1 in order to avoid redundant description.

In each of FIG. 1, FIG. 4, and FIGS. 5(a)(b), the rectangular-shaped coating film 3 is described as an example. However, as a matter of course, the description is applied to the continuous coating film 3.

### (Embodiment 1: FIG. 1)

Here, a case of coating on one surface of the current collector 1 is described as a representative example.

In the coating device 20 in a steady operation state, the current collector 1 is fed out from the metal foil roll 1a in the current collector feed unit 30 by the operation of the current collector feed unit 30.

The viscous coating liquid 2 is extruded from the die 21 toward the fed current collector 1, and the coating liquid 2 is applied, with the width of the nozzle opening 23 of the die 21, on the surface of the current collector 1. The applied film-shaped coating liquid 2 is the coating film 3.

In a case of continuous coating, the coating liquid 2 is continuously extruded on the surface of the current collector 1 according to the conveyance of the current collector 1, and the strip-shaped coating film 3 is formed.

In a case of intermittent extrusion, the coating liquid 2 is intermittently extruded, and the coating films 3 each having a rectangular shape are formed at regular intervals on the surface of the current collector 1. The coating film 3-formed part, and the coating film 3-nonformed part as the uncoated region 5 alternate.

The coating film 3 formed in the above manner, which is in a viscous paste form and has been applied on the strip-shaped current collector 1, is sent to the drying oven 40.

In the drying oven 40, the coating film 3 is subjected to radiant heat from the drying heat source H, is exposed to drying air from the dryer 48, and is gradually dried from the surface. When the coating film 3 has become semi-dry, the coating film 3 is subjected to irradiation with the laser beam L. The semi-dry refers to a state in which the surface of the coating film 3 is dried while the inside remains in a paste-like state.

The CCD camera 62 continues observing the current collector 1 being conveyed. The CCD camera 62 captures a starting end 3b of the coating film 3, and confirms that the front end portion of the coating film 3 has entered the irradiation range of the laser beam L, and then the laser beam L is emitted from the laser emission unit 51 and, with operation by the galvano drive unit 59, also moves according to the movement of the current collector 1, to form the hole 3h (blind hole 3h1 or through hole 3h2) having a necessary depth in the surface of the coating film 3.

In a case of the split type as in FIG. 6(a), a plurality of the holes 3h are formed simultaneously.

In a case of the non-split type as in FIG. 2, drilling operations by the required number of the laser emission units 51 are simultaneously performed in parallel. At this time, as described above, the laser beam L may be steered through the mirror angle adjustment along the two-dimensional XY direction (or three-dimensional XYZ direction, if Z-direction depth of focus needs to be adjusted) according to the movement speed of the current collector 1, and one laser emission unit 51 may perform a plurality of the drilling operations.

The hole 3h (one hole 3h aligned with the optical axis, in a case of the plurality of holes 3h) formed by the laser beam L is observed by the CCD camera 62, and the data is stored in the RAM.

In a case where the laser beam L is a YAG laser beam or a VO4 laser beam, the irradiated material only melts but does not sublimate at the irradiated point. Thus, in general, assist gas is injected toward the hole 3h, to blow away the molten material (melt). As described above, the molten material adheres to the surface of the coating film 3 as fine particles, resulting in quality degradation as a product. Thus, such fine particles are sucked and removed through the suction nozzle 70. At this time, in a case where the air outlet 77 of the blowing nozzle 76 is provided toward the suction port 71 of the suction nozzle 70, the above fine particles can be effectively removed.

On the other hand, in a case where the laser beam L is a green laser beam (second harmonic) or a blue laser (third harmonic), sublimation occurs at an irradiation part, and an irradiated object directly becomes a high-temperature gas, which rises from the irradiated part. This high-temperature gas also comes into contact with the surrounding cold air directly above the gas, and instantaneously becomes fine powder. However, as described above, the fine powder is sucked and removed through the suction nozzle 70, and does not adhere to the surface of the coating film 3. In the case where the laser beam L is the green laser beam (second harmonic) or the blue laser (third harmonic), the thermal impact on the irradiation part is small, which does not cause damage to the coating film 3.

The surrounding area and the inner surface of the hole 3h formed as described above remain in a viscous state, and, with the surface tension of the surrounding area and the inner surface of the hole 3h, the irradiation mark due to the laser beam L is erased, so that the surface becomes a smooth surface without unevenness.

In a case where the blind hole 3h1 or the through hole 3h2 is formed in the coating film 3 in the course of drying as described above, after that, a solvent or moisture staying inside the coating film 3 escapes through the hole 3h, and drying of the coating film 3 is promoted. If the drying of the coating film 3 is promoted, as a matter of course, the drying time or the distance necessary for the drying is shortened, so that the entire length of the drying oven 40 can be shortened.

After the drying, the current collector 1 becomes the original sheet 10 for a secondary battery, and is wound by the winding unit 38.

FIGS. 5(a)(b) each show a case where the coating liquid 2 is applied on both surfaces of the current collector 1. FIG. 5(a) shows a case where the dies 21a, 21b are positioned directly opposite each other on the front and back surface sides with the current collector 1 therebetween, and coatings thereof are performed simultaneously. Therefore, no conveyor roller can be provided in the formation range of the coating film 3, downstream of the dies 21a, 21b up to the exit of the drying oven 40.

Similarly, FIG. 5(b) shows a case where the dies 21a, 21b are installed at different locations, and no conveyor roller can be provided in the formation range of the coating film 3, after the die 21b on the lower side up to the exit of the drying oven 40. However, the conveyor roller can be provided for the uncoated region 5 on each lateral edge of the current collector 1.

The transmission windows 42 are provided in both the side walls 40a of the drying oven 40 such that the hole forming process by the laser beam L can be performed from both the sides of the current collector 1.

Even when the coating films 3 are formed on both the surfaces of the current collector 1, in a case where the hole 3h is the through hole 3h2, it may be sufficient that the transmission window 42 is provided only in one side wall 40a, and the hole forming process by the laser beam L is performed through one side surface.

### (Embodiment 2: FIG. 4)

In this case, the hole forming process is performed before the coating film 3 enters the entrance of the drying oven 40. At this time, the entire coating film 3 is in an undried state. When the laser beam L is applied to the coating film 3 in this state, in a case where irradiation is performed for a short time, a depression (blind hole 3h1) is generated since the coating film 3 is soft.

In a case where irradiation is performed for a long time, a portion around the hole 3h is dried in a thin-skin state by the heat, and the shape of the hole 3h is maintained. Since the others are the same as those in embodiment 1, the description for embodiment 1 is applied.

In the present invention, as described above, since the hole forming process with the laser beam L is performed on the undried or semi-dry coating film 3, in the following drying step, evaporation of a solvent or moisture from the hole 3h is promoted, a drying time is shortened, and thus the entire length of the drying oven 40 can be greatly shortened.

### Reference Signs List

g gap
H drying heat source
L laser beam
La to Ln split laser beam
1 metal foil current collector
1a metal foil roll
2 coating liquid
3 coating film
3b starting end
3c lateral margin part
3h hole
3h1 blind hole
3h2 through hole
3z cured coating film
5 uncoated region
10 original sheet (for secondary battery)
20 coating device
21 (21a, 21b) die
22 liquid reservoir
23 nozzle opening
25 coating liquid supply unit
30 current collector feed unit
34 backup roller
36 (36a to 36n) conveyor roller
38 winding unit
40 drying oven
40a side wall
42 transmission window
44 heat-resistant glass
46 dryer
48 passage
50 laser irradiation device
51 laser emission unit
52 laser generating unit
56 total reflection mirror
54 laser transfer component
58 split-type lens
59 galvano drive unit
59m, 59n drive motor
59a, 59b galvano mirror
60 image processing device
62 CCD camera
65 external monitor
68 input device
70 suction nozzle
71 suction port
76 blowing nozzle
77 air outlet
80 control unit
81 CPU
82 ROM
83 RAM

## Claims

1. A drying method for a coating film in which a current collector 1 of a metal foil having a long strip shape and being conveyed in one direction is intermittently or continuously coated with a coating liquid 2 as an active material mixture for a secondary battery such that a coating film 3 is formed on the current collector 1, subsequently, the current collector 1 of the metal foil is sent to a drying step, and the current collector 1 of the metal foil is heated such that the coating film 3 is dried in the drying step, wherein
before or during the drying step for the coating film 3, the coating film 3 is irradiated with a laser beam L such that a hole 3h is formed in the coating film 3.

2. The drying method for the coating film according to claim 1, wherein
the hole 3h is a blind hole 3h1 that extends from a surface of the coating film 3 and that does not reach the current collector 1 of the metal foil, or a through hole 3h2 penetrating the coating film 3 and the current collector 1 of the metal foil.

3. The drying method for the coating film according to claim 1 or 2, wherein
air in an irradiation range of the laser beam L is sucked, and fine dust generated from the coating film 3 by laser irradiation is sucked and removed.

4. A coating device 20 comprising:
a current collector feed unit 30 that feeds a current collector 1 composed of a long metal foil in one direction;
a die 21 that applies a coating liquid 2 as an active material mixture for a secondary battery on a surface of the fed current collector 1, and that forms a coating film 3 on the surface of the current collector 1;
a drying oven 40 that is provided downstream of the die 21, that includes a passage 46 through which the current collector 1 being conveyed in one direction passes and a drying heat source H, and that dries the coating film 3;
a winding unit 38 that winds the current collector 1 which has been conveyed out of the drying oven 40 and which has the dried coating film 3 applied thereon; and
a laser irradiation device 50 that irradiates the coating film 3 having become semi-dry with a laser beam L in the drying oven 40, and that forms a blind hole 3h1 that extends from a surface of the coating film 3 and that does not reach the current collector 1, or a through hole 3h2 penetrating the coating film 3 and the current collector 1, wherein
the laser irradiation device 50 is provided at a lateral side of the drying oven 40, and
a transmission window 42 through which the laser beam L passes is provided in a side wall 40a of the drying oven 40.

5. A coating device comprising:
a current collector feed unit 30 that feeds a current collector 1 composed of a long metal foil in one direction;
a die 21 that applies a coating liquid 2 as an active material mixture for a secondary battery on a surface of the fed current collector 1, and that forms a coating film 3 on the surface of the current collector 1;
a drying oven 40 that is provided downstream of the die 21, that includes a passage 46 through which the current collector 1 being conveyed in one direction passes and a drying heat source H, and that dries the coating film 3;
a winding unit 38 that winds the current collector 1 which has been conveyed out of the drying oven 40 and which has the dried coating film 3 applied thereon; and
a laser irradiation device 50 that is provided upstream of the drying oven 40, that irradiates the coating film 3 in an undried state before the coating film 3 is conveyed into the drying oven 40, with a laser beam L, and that forms a blind hole 3h1 extending from a surface of the coating film 3 and not reaching the current collector 1, or a through hole 3h2 penetrating the coating film 3 and the current collector 1.

6. The coating device according to claim 4 or 5, wherein
a suction nozzle 70 that includes a suction port 71 covering an irradiation range of the laser beam L is further installed.
